# EUROPÄISCHE PATENTSCHRIFT

(11) **EP 0 910 222 B1**
(45) Veröffentlichungstag und Bekanntmachung des Hinweises auf die Patenterteilung: **24.10.2007**
(21) Anmeldenummer: 98440217.2
(22) Anmeldetag: 09.10.1998
(51) Int. Cl.: H04Q 3/00

(54) **Verfahren zur Erbringung von Telekommunikationsfunktionen, sowie netzseitige Einrichtung, Knotenpunkt, Datenverarbeitungsanlage, Endgerät und Telekommunikationssystem hierfür**
Method for providing telecommunication functions, as well as network arrangement, node, data processing arrangement, terminal and telecommunication system therefor
Méthode fournissant des fonctions de télécommunication, ainsi que dispositif de réseau, noeud, dispositif de traitement de données, terminal, et système de télécommunication correspondants

(30) Priorität: 18.10.1997 DE 19746132
(43) Veröffentlichungstag der Anmeldung: 21.04.1999
(73) Patentinhaber: Alcatel Lucent, 75008 Paris (FR)
(72) Erfinder: Wajda, Wieslawa, 75210 Keltern (DE)
(74) Vertreter: Brose, Gerhard

(56) Entgegenhaltungen:
- EP-A- 0 654 930
- WO-A-94/15433
- WO-A-96/32820
- DE-A- 19 532 490
- US-A- 5 583 917
- SÖDERBERG L: "EVOLVING AN INTELLIGENT ARCHITECTURE FOR PERSONAL TELECOMMUNICATION" ERICSSON REVIEW, Bd. 70, Nr. 4, 1. Januar 1993 (1993-01-01), Seiten 156-171, XP000415352 STOCKHOLM, SE ISSN: 0014-0171

## Beschreibung

Die vorliegende Erfindung betrifft ein Verfahren zur Erbringung von Telekommunikationsfunktionen gemäß dem Oberbegriff des Anspruchs 1, sowie eine netzseitige Einrichtung hierfür gemäß dem Oberbegriff des Anspruchs 6, einen Knotenpunkt hierfür gemäß dem Oberbegriff des Anspruchs 7, eine Datenverarbeitungsanlage hierfür gemäß dem Oberbegriff des Anspruchs 8, ein Endgerät hierfür gemäß dem Oberbegriff des Anspruchs 9 und ein Telekommunikationssystem hierfür gemäß dem Oberbegriff des Anspruchs 10.

Der zunehmenden Mobiltität von Telekommunikationsteilnehmern werden Mobilfunknetze in besonderer Weise gerecht. Mit seinem Endgerät kann sich ein Teilnehmer an verschiedenen Stellen in einem Mobilfunknetz anmelden und die Dienste des Mobilfunknetzes nutzen. Andrerseits ist der Teilnehmer dann auch für Anrufe aus dem Mobilfunknetz oder auch aus weiteren Telekommunikationsnetzen erreichbar. Solange der Teilnehmer sein Endgerät nicht in dem Mobilfunknetz angemeldet hat, kann in dem Mobilfunknetz eine Einrichtung die Funktion eines Anrufbeantworters übernehmen, ankommende Rufe annehmen und Nachrichten speichern, die die jeweiligen Anrufer hinterlassen.

Wenn sich der Teilnehmer in dem Mobilfunknetz anmeldet, beschafft sich die Mobilfunk-Vermittlungsstelle MSC (= Mobile services Switching Centre), in deren Wirkungsbereich sich der Teilnehmer befindet, zunächst die den Teilnehmer kennzeichnenden Daten aus einer Datenbank. Je nach Aufenthaltsort des Teilnehmers wird als Datenbank die Heimatdatenbank des Teilnehmers, das sogenannte HLR (= Home Location Register), oder eine Besucherdatenbank, das sogenannte VLR (= Visitor Location Register), genutzt. Kennzeichnende Daten sind z.B. Tarifinformationen oder ein teilnehmerspezifisches Dienstleistungsprofil, d.h. eine Liste von Dienstleistungsfunktionen, die dem Teilnehmer zur Verfügung gestellt werden. Eine solche Dienstleistung wäre z.B. die bereits erwähnte Anrufbeantworterfunktion.

Neben der ortsunabhängigen Bereitstellung einer einheitlichen Umgebung von Dienstleistungsfunktionen ist es für einen mobilen Teilnehmer wesentlich, daß er immer unter einer gleichbleibenden Telefonnummer erreichbar ist. Unter dem Begriff UMTS (=Universal Mobile Telecommunications System) wird ein solches universelles Telekommunikationsnetz auf dem Gebiet des Mobilfunkes verstanden, das aus unterschiedlichen Mobilfunknetzen gebildet wird. Bei der 'Universal Personal Telecommunications' (UPT) wird die Mobiltiät des Teilnehmers noch erweitert, da er hier nicht nur in Mobilfunknetzen, sondern auch in sogenannten Intelligenten Netzen unter einer gleichbleibenden Telefonnummer erreichbar ist. Der Teilnehmer kann sich in einem UPT-Netz sowohl mit einem Endgerät für Mobilfunksysteme als auch mit einem Endgerät für leitungsgebundene Telekommunikationsnetze anmelden. Üblicherweise werden jedoch auch in UPT-Netzen unterschiedlichen Gerätetypen, z.B.

Telefonapparaten und Faxgeräten, unterschiedliche Telefonnummern zugeordnet, so daß pro UPT-Teilnehmer unterschiedliche Identifikatoren je nach Art der gewünschten Kommunikation erforderlich sind.

Die bekannten Formen der mobilen Telekommunikation eines Teilnehmers beziehen sich im wesentlichen auf Mobilfunknetze und UPT-Netze, deren Telekommunikationsfunktionen mit einem Mobilfunk-Fernsprechapparat bzw. mit einem leitungsgebundenen Fernsprechapparat genutzt werden. Die Kommunikationsmöglichkeiten des mobilen Teilnehmers orientieren sich dabei an den technischen Leistungsmerkmalen des genutzten Endgerätes. Soll der mobile Teilnehmer z.B. ein Fax erhalten, während er mit einem Mobilfunk-Fernsprechapparat unterwegs ist, der nur Sprachdaten verarbeiten kann, so kann er dieses Fax nicht oder lediglich an einem Faxgerät empfangen, das an seinem Arbeitsplatz zu Hause steht und über einen diesem Faxgerät zugeordneten Identifikator erreichbar ist.

In der internationalen Patentanmeldung WO 96/32820 A ist ein Netzwerk offenbart, das in vier funktionale Unternetzwerke aufgeteilt ist. Diese vier Untemetzwerke können separat entwickelt werden, ohne dass dabei auf die verwendete Technologie Rücksicht genommen werden muss, da die Schnittstellen zwischen den Untemetzwerken strikt definiert sind. Speziell ist offenbart, dass die Mobilität der Nutzer von der Mobilität der Endgeräte getrennt ist, und die Identität der Endgeräte verwendet wird, um zu ermitteln, ob das Netzwerk die Endgeräte unterstützt und um ein sogenanntes Handover durchzuführen.

In der Europäischen Patentanmeldung EP-A-0 654 930 ist ein Verfahren für den Zugriff auf einen Telefondienst in einem Kommunikationssystem offenbart, das mehrere leitungsvermittelte Telefonnetzwerke umfasst, bei dem in einer zentralen Prozesseinheit zunächst ermittelt wird, welche Telefondienste einem Anrufer zur Verfügung stehen, der Anrufer anschließend einen Telefondienst auswählt, und die zentrale Prozesseinheit schließlich die Ausführung des Telefondienstes in einem geeigneten Telefonnetzwerk veranlasst.

Aufgabe der Erfindung ist es, für einen Teilnehmer Telekommunikationsfunktionen an verschiedenen Orten innerhalb eines Telekommunikationsnetzes zu erbringen, unabhängig davon, ob ein mit dem Telekommunikationsnetz verbindbares geeignetes Endgerät des Teilnehmers mit dem Telekommunikationsnetz verbunden ist oder nicht.

Diese Aufgabe wird durch ein Verfahren gemäß der technischen Lehre des Anspruchs 1, eine netzseitige Einrichtung gemäß der technischen Lehre des Anspruchs 6, einen Knotenpunkt gemäß der technischen Lehre des Anspruchs 7, eine Datenverarbeitungsanlage gemäß der technischen Lehre des Anspruchs 8, ein Endgerät gemäß der technischen Lehre des Anspruchs 9 und ein Telekommunikationssystem gemäß der technischen Lehre des Anspruchs 10 gelöst. Weitere vorteilhafte Ausgestaltungen der Erfindung sind den abhängigen Ansprüchen und der Beschreibung zu entnehmen.

Im folgenden werden die Erfindung und ihre Vorteile anhand eines Ausführungsbeispiels unter Zuhilfenahme der Zeichnungen dargestellt.
- Figur 1: zeigt eine beispielhafte Anordnung, in der das erfindungsgemäße Verfahren angewendet werden kann und die zwei erfindungsgemäße netzseitige Einrichtungen und in einem erfindungsgemäßen Telekommunikationsnetz und ein erfindungsgemäßes Endgerät enthält.
- Figur 2: zeigt ein erfindungsgemäßes Telekommunikationssystem, in dem ein erfindungsgemäßes Endgerät, ein Telekommunikationsnetz, ein erstes Netzwerk mit Einrichtungen zur Erbringung von Dienstfunktionen und ein zweites Netzwerk aus netzseitigen Einrichtungen jeweils miteinander verbunden sind.

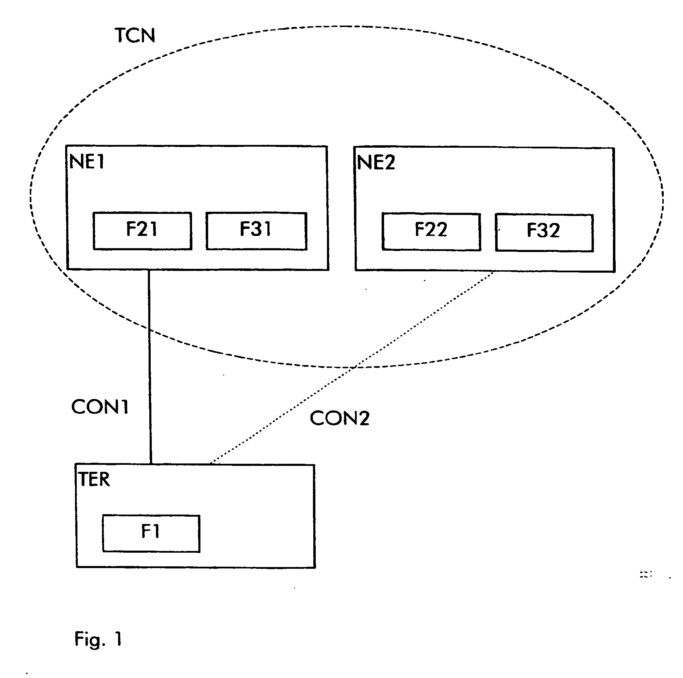

In Figur 1 ist eine Anordnung dargestellt, in der das erfindungsgemäße Verfahren angewendet werden kann. Ein Telekommunikationsnetz TCN enthält beispielhaft zwei netzseitige Einrichtungen NE1 und NE2, die für eine Vielzahl möglicher weiterer netzseitigen Einrichtungen innerhalb des Telekommunikationsnetzes TCN stehen. Innerhalb des Telekommunikationsnetzes TCN bestehen in Figur1 nicht dargestellte Verbindungen, z.B. können die netzseitigen Einrichtungen NE1 und NE2 miteinander verbunden sein. Das Telekommunikationsnetz TCN kann ein homogenes Telekommunikationsnetz sein oder aus einer Mehrzahl von Teilnetzen gebildet werden, so z.B. aus einer Kombination von diversen Mobilfunknetzen und leitungsgebundenen Fernsprechnetzen.

Weiter ist in Figur 1 ein Endgerät TER mit einem Funktionsblock F1 abgebildet, der für Mittel zum Ausführen erster Funktionsanteile steht. Das Endgerät TER kann z.B. ein Fernsprechapparat, ein Faxgerät oder ein Personal Computer sein. Die in solchen Endgeräten enthaltenen Mikroprozessoren, Speichereinrichtungen, Eingabeeinheiten und Ausgabeeinheiten können z.B. die ersten Funktionsanteile leisten. Das Endgerät TER kann sowohl über eine Verbindung CON1 mit der netzseitigen Einrichtung NE1 als auch über eine Verbindung CON2 mit der netzseitigen Einrichtung NE2 verbunden werden.

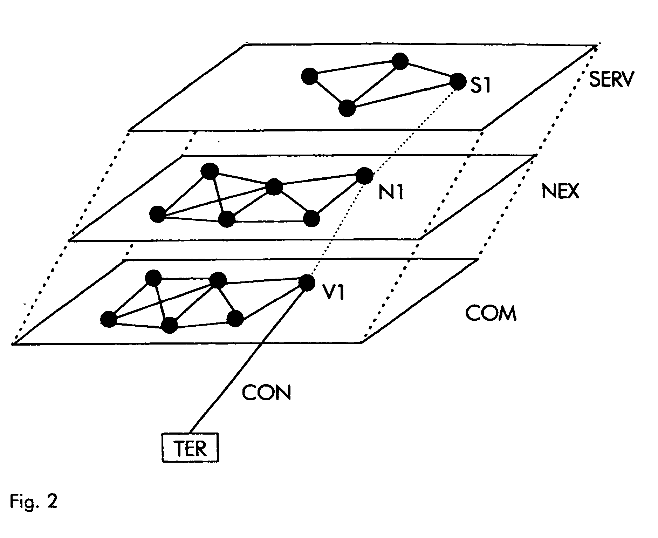

Die netzseitige Einrichtung NE1 enthält zwei Funktionsblöcke F21 und F31, die netzseitige Einrichtung NE2 zwei Funktionsblöcke F22 und F32. Der Funktionsblock F21 symbolisiert Mittel zum Ausführen zweiter Funktionsanteile, der Funktionsblock F31 Mittel zum Ausführen dritter Funktionsanteile. In der netzseitigen Einrichtung NE2 können die zweiten oder mit diesen vergleichbare Funktionsanteile von dem Funktionsblock F22 ausgeführt werden. Der Funktionsblock F32 kann die dritten Funktionsanteile oder mit diesen vergleichbare Funktionsanteile erbringen. Die Mittel zum Erbringen der Funktionsanteile in den netzseitigen Einrichtungen NE1 und NE2 können z.B. Systeme sein, die einen Mikroprozessor, eine Speichereinrichtung für Programmcode, Eingabeeinheiten und Ausgabeeinheiten enthalten, aber auch komplexere Systeme, deren Architektur und Zusammenwirken anhand Figur 2 noch näher erläutert werden. Da die Funktionsblöcke F22 und F32 der netzseitigen Einrichtung NE2 anders ausgestaltete Mittel als die Funktionsblöcke F21 und F31 der netzseitigen Einrichtung NE1 haben können, z.B. andere Mikroprozessoren, kann die Ausführung der zweiten und dritten Funktionsanteile in den beiden netzseitigen Einrichtungen NE1 und NE2 unterschiedlich sein. Zur Vereinfachung der Darstellung werden im folgenden nur die jeweils zweiten und dritten Funktionsanteile im Zusammenhang mit den Funktionsblöcken F22 und F32 erwähnt, ohne auf eine äquivalente Erfüllung der Funktionsanteile weiter einzugehen.

Der Umfang und die Ausgestaltung der Telekommunikationsfunktionen, die die netzseitigen Einrichtungen NE1 und NE2 erbringen sollen, kann allgemein für alle Teilnehmer, eine Teilnehmergruppe oder jeweils individuell für einzelne Teilnehmer festgelegt werden, so wie in dem eingangs erwähnten teilnehmerspezifischen Dienstleistungsprofil. Solch ein Dienstleistungsprofil kann in einer Speichereinrichtung in dem Telekommunikationsnetz TCN abgelegt sein oder auch in einer oder mehreren der netzseitigen Einrichtungen. Das Dienstleistungsprofil kann z.B. beschreiben, welche möglichen Ausführungsformen das Endgerät TER haben kann, mit dem ein Teilnehmer erreichbar ist, z.B. Personal Computer oder Mobilfunktelefon, und welche Leistungsmerkmale das Endgerät TER aufweist, z.B. welche Arten von Daten von dem Endgerät TER auswertbar sind. Es ist auch möglich, daß der Teilnehmer über mehrere Endgeräte erreichbar ist. In einem solchen Fall werden dann die Eigenschaften dieser Endgeräte in dem Dienstleistungsprofil abgebildet.

Zur Nutzung der Telekommunikationsfunktionen des Telekommunikationsnetzes TCN meldet der Teilnehmer sein Endgerät TER bei dem Telekommunikationsnetz TCN an. Dazu wird eine Verbindung zwischen dem Endgerät TER und dem Telekommunikationsnetz TCN aufgebaut. Diese Verbindung kann leitungsgebunden sein oder über eine Funkstrecke erfolgen. Dann sendet das Endgerät TER dem Telekommunikationsnetz TCN einen Identifizierungscode für den Verbindungswunsch zu der netzseitigen Einrichtung NE1, anhand dessen das Telekommunikationsnetz TCN die Verbindung CON1 aufbaut. Über die Verbindung CON1 kann das Endgerät TER Daten über seine Leistungsmerkmale an die netzseitige Einrichtung NE1 übermitteln. So kann der netzseitigen Einrichtung NE1 z.B. bekannt gemacht werden, daß das Endgerät TER ein Faxgerät ist oder ein Telefonapparat, der eine Anzeigevorrichtung besitzt. Es ist aber auch möglich, auf das Übermitteln der Daten der Leistungsmerkmale zu verzichten, z.B. weil der Teilnehmer nur einen einzigen Gerätetyp als Endgerät TER einsetzt, dessen Leistungsmerkmale der netzseitigen Einrichtung NE1 durch das bereits beschriebene Dienstprofil vorbekannt sind, oder weil das Endgerät TER ein universelles Gerät ist, auf dessen Eigenschaften sich die netzseitige Einrichtung NE1 nicht eigens abstimmen muß. Weitere Schritte im Rahmen der Anmeldeprozedur sind möglich, wie z.B. ein Authentifizierungsvorgang, mit dem eine mißbräuchliche Nutzung von Telekommunikationsfunktionen zu Lasten des Teilnehmers verhindert werden soll, werden aber hier nicht näher erläutert.

Nach dem Anmeldevorgang können der Funktionsblock F1 in dem Endgerät TER und der Funktionsblock F21 in der netzseitige Einrichtung NE1 zusammenwirken. Z.B. kann der Funktionsblock F1 einen Verbindungswunsch, der an einem Tastenfeld des Endgerätes TER eingegeben wird, an den Funktionsblock F21 übermitteln. Der Funktionsblock F21 ermittelt dann z.B. mit Hilfe einer Tariftabelle zu einem günstigen Tarif einen Verbindungsweg in dem Telekommunikationsnetz TCN. Auf diesem Verbindungsweg wird dann die gewünschte Verbindung aufgebaut.

Auch bei in der netzseitigen Einrichtung NE1 ankommenden Rufen können die Funktionsblöcke F21 und F1 in vorteilhafter Weise zusammenwirken. Im einfachsten Fall ist das Endgerät TER ein Telefonapparat und der ankommende Ruf für eine Sprachkommunikation vorgesehen. Dann gibt der Funktionsblock F21 Sprachdaten von dem Telekommunikationsnetz TCN zu dem Funktionsblock F1 und umgekehrt lediglich weiter. Wird jedoch von der netzseitigen Einrichtung NE1 eine E-Mail empfangen, so kann der Funktionsblock F21 z.B. die E-Mail in Sprachdaten wandeln, die der Funktionsblock F1 in akustische Signale umsetzen kann. Auf diese Weise können auch andere ankommende und zu dem jeweiligen Funktionsblock F1 des Endgerätes TER nicht kompatible Daten von dem Funktionsblock F21 in kompatible Formate gewandelt werden. Der Funktionsblock F21 kann jedoch auch diese ankommenden Daten zur Zwischenspeicherung an den Funktionsblock F31 weitergeben, so daß diese Daten später von einem Endgerät TER anderen Typs abgerufen werden können, im Falle der E-Mail z.B. von einem Personal Computer.

Durch einen Abmeldevorgang, z.B. durch Senden einer Abmeldenachricht, kann das Endgerät TER die Verbindung CON1 zu der netzseitigen Einrichtung NE1 lösen. Dann ersetzt die netzseitige Einrichtung NE1 die ersten Funktionsanteile, die sonst von dem Funktionsblock F1 geleistet würden, durch dritte Funktionsanteile, die der Funktionsblock F31 erbringt. Einen ankommenden Ruf kann der Funktionsblock F31 z.B. an ein anderes Ziel umleiten oder als Anrufbeantworter entgegennehmen. Der Funktionsblock F31 kann auch z.B. anhand einer Spracherkennung oder anhand der sogenannten 'Calling Line Identification Presentation' in ISDN-Telekommunikationsnetzen den Anrufenden identifizieren und ihm eine speziell für ihn hinterlassene Nachricht senden. Auch nach einem unbeabsichtigten Lösen der Verbindung CON1, z.B. einem Abreißen einer Funkverbindung zwischen dem Endgerät TER und dem Telekommunikationsnetz TCN, tritt der Funktionsblock F31 an die Stelle des Funktionsblockes F1. Das Fehlen der Verbindung CON1 wird von der netzseitigen Einrichtung NE1 durch eine Verbindungsprüfung erkannt, z.B. durch Senden einer Prüfnachricht an das Endgerät TER, das diese beantworten muß.

In besonders vorteilhafter Weise unterstützt die Erfindung die Mobilität des Teilnehmers. Es ist einerseits möglich, daß das Endgerät TER an verschiedenen Anschlußstellen mit dem Telekommunikationsnetz TCN verbunden wird und von dort jeweils eine Verbindung CON1 zu der netzseitigen Einrichtung NE 1 aufgebaut wird, andrerseits kann auch die netzseitige Einrichtung NE2 über die CON2 mit dem Endgerät TER verbunden werden und die Funktionen der netzseitigen Einrichtung NE 1 teilweise oder vollständig erfüllen. Der Funktionsblock F22 tritt dann an die Stelle des Funktionsblockes F21 und der Funktionsblock F32 an die Stelle des Funktionsblockes F31. Die netzseitige Einrichtung NE2 kann sich wie in dem eingangs erwähnten Beispiel in einem Knotenpunkt befinden, der näher bei dem Endgerät TER liegt. Die netzseitigen Einrichtungen NE1 und NE2 können jedoch auch jeweils Teil zweier unterschiedlicher Datenverarbeitungsanlagen sein, die unterschiedliche Kapazitätsauslastungen aufweisen. Wenn nun die Auslastung der Datenverarbeitungsanlage der netzseitigen Einrichtung NE1 höher ist als diejenige der netzseitigen Einrichtung NE2, übernimmt die netzseitige Einrichtung NE2 die Funktionsanteile der netzseitigen Einrichtung NE1. Auch die Auslastung der Übertragungskapazität des Telekommunikationsnetzes TCN oder Tariffestlegungen für die Benutzung der netzseitigen Einrichtungen NE1 und NE2 können zu einem Funktionsübergang zwischen diesen führen. Der Funktionsübergang kann z.B. von einer zentralen Steuereinrichtung in dem Telekommunikationsnetz TCN, von dem Endgerät TER oder auch von den netzseitigen Einrichtungen NE1 und NE2 selbst ausgelöst werden.

Wie bereits beschrieben, kann der Funktionsblock F21 anhand einer Tariftabelle eine Verbindung zu einem Kommunikationspartner aufbauen, der über ein bekanntes Endgerät, z.B. über einen Telefonapparat, erreichbar ist. Besonders vorteilhaft ist es jedoch, wenn der Funktionsblock F21 eine Verbindung zu einem Kommunikationspartner herstellt, für den eine dritte erfindungsgemäße netzseitige Einrichtung arbeitet. Wenn die netzseitige Einrichtung NE1 der dritten netzseitigen Einrichtung z.B. Daten senden will, so kann die netzseitige Einrichtung NE1 zuvor von der dritten netzseitigen Einrichtung abfragen, in welchem Format die Daten gesendet werden sollen.

Das Endgerät TER kann einen Befehl an die netzseitige Einrichtung NE1 geben, bei geringer Kapazitätsauslastung des Telekommunikationsnetzes TCN einen Datentransfer zu der Kommunikationspartnereinrichtung auszuführen oder zu. einem vorherbestimmbaren Zeitpunkt eine Nachricht, z.B. einen Weckruf, absenden. Die netzseitige Einrichtung NE1 führt den Befehl selbständig aus, unabhängig davon, ob während der Ausführung das Endgerät TER mit ihr verbunden ist.

Wenn einem ersten und einem zweiten Teilnehmer des Telekommunikationsnetzes TCN nur ein Endgerät TER gemeinsam zur Verfügung steht, kann das Endgerät TER mit zwei netzseitigen Einrichtungen zugleich verbunden werden. Im vorliegenden Beispiel arbeitet z.B. die netzseitige Einrichtung NE1 für den ersten Teilnehmer und die netzseitige Einrichtung NE2 für den zweiten Teilnehmer und das Endgerät TER ist über die Verbindungen CON1 und CON2 mit den netzseitigen Einrichtung NE1 bzw. NE2 verbunden. Dann kann der Funktionsblock F21 z.B. ein ankommendes Telefongespräch für den ersten Teilnehmer in oben beschriebener Weise zusammen mit dem Funktionsblock F1 bearbeiten. Wenn während dieses Telefongespräches in dem Funktionsblock F22 für den zweiten Teilnehmer ein Ruf ankommt, kann der Funktionsblock F22 dem Funktionsblock F1 eine Nachricht über dieses Ereignis senden, die dieser z.B. durch eine Anzeige in einer Anzeigevorrichtung in dem Endgerät TER sichtbar macht.

Wenn das Endgerät TER zugleich mit den beiden netzseitigen Einrichtungen NE1 und NE2 verbunden ist, können diese auch gemeinsam Funktionsanteile leisten, indem die Funktionsblöcke F21 und F22 und die Funktionsblöcke F31 und F32 jeweils einen Teil der zweiten und dritten Funktionsanteile erbringen. Ein Funktionsblock F1 in einem Endgerät TER, das sowohl Faxdaten wie auch ein Telefongespräch bearbeiten kann, wird dann z.B. von dem Funktionsblock F21 mit Faxdaten versorgt und bearbeitet zusammen mit dem Funktionsblock F22 die Daten des Telefongespräches.

Wenn zwei Endgeräte TER unterschiedlichen Typs an die netzseitige Einrichtung NE1 gleichzeitig angeschlossen werden, z.B. ein Telefonapparat und ein Faxgerät, kann der Funktionsblock F21 ankommende Daten jeweils demjenigen Endgerät TER zukommen lassen, dessen Funktionsblock F1 die Daten am besten weiterverarbeiten kann. Sprachdaten sendet der Funktionsblock F21 dann vorzugsweise an den Telefonapparat, Bilddaten und Textdaten an das Faxgerät, wo die Daten von dem jeweiligen Funktionsblock F1 ausgegeben werden. In der netzseitigen Einrichtung NE1 kann jedoch auch vorbestimmt werden, welche Datentypen welchem Endgerätetyp zugeordnet sind. So kann der Funktionsblock F21eine E-Mail je nach Vorbestimmmung zum Ausdrucken an das Faxgerät weitergeben oder zur Anzeige in einer Anzeigevorrichtung an den Telefonapparat. Diese Vorbestimmung wird erleichtert, wenn das Endgerät TER Ein- und Ausgabemittel für viele Arten von akustischen und optischen Medien besitzt, wie z.B. ein Multimedia-PC.

Über die Telekommunikationsfunktionen hinaus kann die netzseitige Einrichtung NE1 in Zusammenwirkung mit dem Endgerät TER auch Anwendungsprogrammfunktionen anbieten. Anwendungsprogramme sind z.B. Textverarbeitung, Tabellenkalkulation, Bildverarbeitung oder eine Kombination solcher Datenverarbeitungsprogramme. So kann ein Teilnehmer mit Hilfe der netzseitigen Einrichtung NE1 und dem Endgerät TER nicht nur Daten senden und empfangen, sondern auch verarbeiten, z.B. wandeln, modifizieren, kopieren und speichern. Anwendungsprogramme können aber auch ein persönlicher Kalender oder ein persönliches Telefonbuch des Teilnehmers sein, deren Einträge von der netzseitigen Einrichtung NE1 verwaltet werden. Die netzseitige Einrichtung NE1 kann die Einträge selbst speichern oder von einer weiteren Einrichtung speichern lassen, z.B. von einer Datenbank in dem Telekommunikationsnetz TCN.

Indem das Telekommunikationsnetz TCN dem Teilnehmer an verschiedenen Orten mit Hilfe einer oder mehrerer netzseitiger Einrichtungen jeweils die Möglichkeit bietet, mit seinem Endgerät TER für ihn persönlich definierbare Telekommunikationsfunktionen und Anwendungsprogrammfunktionen zu nutzen, stellt das Telekommunikationsnetz TCN dem Teilnehmer eine virtuelle Telekommunikations- und Arbeitsumgebung zur Verfügung. Über diese Umgebung ist der Teilnehmer jederzeit erreichbar, da sie dann, wenn kein Endgerät TER des Teilnehmers mit dem Telekommunikationsnetz TCN verbunden ist, die Funktionen des Endgerätes TER ersetzt oder nachbildet. Auch wenn der Teilnehmer das Endgerät TER nicht bedienen will oder kann, z.B. wenn er einen Anruf nicht annimmt, leistet die Telekommunikations- und Arbeitsumgebung eigene Funktionsanteile anstatt der von dem Endgerät TER nicht erbrachten Funktionsanteile, z.B. wird die bereits erwähnte Anrufbeantworterfunktion aktiviert. Durch die Zuordnung einer virtuellen Telekommunikations- und Arbeitsumgebung zu einem Teilnehmer ergibt sich auch die Möglichkeit, Gebühren für die Nutzung von Telekommunikationsfunktionen unabhängig vom Ort der Nutzung zu berechnen.

Ein erfindungsgemäßes Telekommunikationssystem ist in Figur 2 dargestellt. Das System ist gegliedert in drei parallelogrammförmig dargestellte Netzwerkebenen, die durch miteinander verbundene Knotenpunkte symbolisierte Netzwerke NEX und SERV und ein ebenso symbolisiertes Telekommunikationsnetz COM enthalten. Gestrichelte Linien zwischen den Eckpunkten der Netzwerkebenen stehen beispielhaft für weitere nicht dargestellte Verbindungen jeweils zwischen dem Telekommunikationsnetz COM, dem Netzwerk NEX und dem Netzwerk SERV. Die unterste Netzwerkebene bildet das Telekommunikationsnetz COM, das im wesentlichen Übertragungs- und Vermittlungsfunktionen leistet. Deshalb sind von dem Telekommunikationsnetz COM vereinfachend nur Vermittlungsstellen als Knotenpunkte und Übertragungswege zwischen den Knotenpunkten gezeigt. Mit dem Telekommunikationsnetz COM ist ein Endgerät TER verbunden, wie es im Zusammenhang mit Figur 1 bereits beschrieben wurde. Über dem Telekommunikationsnetz COM ist das zweite Netzwerk NEX mit erfindungsgemäßen netzseitigen Einrichtungen angeordnet, die z.B. in den Knotenpunkten in dem Netzwerk NEX liegen und dadurch miteinander verbunden sind. Die oberste Ebene bildet das erste Netzwerk SERV, dessen Knotenpunkte Einrichtungen zur Bereitstellung von Dienstfunktionen haben. Solche Einrichtungen können z.B. Datenverarbeitungsanlagen sein, die Datenbankfunktionen wahrnehmen oder Dienstprogramme und Anwendungsprogramme liefern, die z.B. in dem Endgerät TER oder in einer netzseitigen Einrichtung des Netzwerkes NEX ausgeführt werden können.

Das Telekommunikationsnetz COM und die Netzwerke NEX und SERV können sowohl, wie beschrieben, in abgegrenzten realen Netzwerkebenen liegen, deren Knotenpunkte und Verbindungsleitungen eindeutig jeweils einem der Netzwerke zugeordnet ist, als auch in logischen Netzwerkebenen, die über ihre Funktionen definiert sind. So kann z.B. ein Knotenpunkt des Telekommunikationsnetzes COM eine oder mehrere erfindungsgemäße netzseitige Einrichtungen enthalten oder sogar über eine Datenverarbeitungsanlage verfügen, die logisch dem Netzwerk SERV zugeordnet ist. Ebenso kann eine Datenverarbeitungsanlage des Netzwerkes SERV mehrere erfindungsgemäße netzseitige Einrichtungen besitzen. Andere Kombinationen der Einrichtungen des Telekommunikationsnetzes COM und der Netzwerke NEX und SERV sind möglich, beeinträchtigen jedoch die funktionale Trennung in die genannten drei logischen Netzwerkebenen nicht. Weiterhin sind in dem Telekommunikationsnetz COM und in den Netzwerken NEX und SERV neben den symbolisch dargestellten Knotenpunkten und Verbindungsleitungen weitere nicht gezeichnete netzwerktypische Einrichtungen enthalten, z.B. Konzentratoren, Vorfeldeinrichtungen und Netzwerksteuerungseinrichtungen.

Zur Nutzung des in Figur 2 dargestellten Telekommunikationssystemes wird zunächst das Endgerät TER über eine Verbindungsleitung CON mit einem Knotenpunkt V1 des Netzwerkes COM verbunden. Der Knotenpunkt V1 setzt die Verbindung CON zu einer netzseitige Einrichtung N1 in dem Netzwerk NEX fort, die für die Zusammenwirkung mit dem Endgerät TER vorgesehen ist. Die netzseitige Einrichtung N1 kann z.B. von dem Knotenpunkt V1 anhand einer Zuordnungstabelle von netzseitigen Einrichtungen zu Endgeräten ermittelt werden. Das Endgerät TER kann sich nun in der bereits beschriebenen Weise bei der netzseitigen Einrichtung N1 anmelden, so daß die netzseitige Einrichtung N1 und das Endgerät TER zusammen Telekommunikationsfunktionen anbieten können.

Weiterhin kann die netzseitige Einrichtung N1 eine Verbindung zu einer Datenverarbeitungsanlage S1 des Netzwerkes SERV aufbauen und von dort Module für Dienstprogramme und Anwendungsprogramme erhalten, welche die netzseitige Einrichtung N1 alleine oder zusammen mit dem Endgerät TER ausführen kann. In welchem Umfang die netzseitige Einrichtung N1 Dienstprogrammfunktionen, Anwendungsprogrammfunktionen und Telekommunikationsfunktionen alleine erbringt oder die Funktionen der Datenverarbeitungsanlage S1 beansprucht, kann z.B. gemäß der Leistungsfähigkeit der netzseitigen Einrichtung N1 oder der Datenverarbeitungsanlage S1 oder gemäß der Übertragungskapazität der Verbindung zwischen der netzseitigen Einrichtung N1 und der Datenverarbeitungsanlage S1 bestimmt werden. Es ist aber auch möglich, häufig benötigte Funktionsanteile stets von der netzseitigen Einrichtung N1 ausführen zu lassen und Programmmodule für seltener benötigte Funktionsanteile von der Datenverarbeitungsanlage S1 bereitstellen zu lassen.

Nach ähnlichen Gesichtspunkten kann festgelegt werden, welchen Umfang die ersten Funktionsanteile in dem Endgerät TER und welchen Umfang die zweiten Funktionsanteile in der netzseitigen Einrichtung N1 besitzen. Je nach Ausgestaltung der Mittel zur Erbringung der jeweiligen Funktionsanteile kann z.B. das Endgerät TER sich im wesentlichen auf Eingabe- und Ausgabefunktionen beschränken und die netzseitige Einrichtung N1 die übrigen Funktionsanteile der Datenverarbeitung und Telekommunikation leisten. Es können jedoch auch Programmodule zur Erbringung der ersten Funktionsanteile in dem Endgerät TER gespeichert sein oder von der netzseitigen Einrichtung N1 in das Endgerät TER geladen werden, so daß das Endgerät TER diese Programmodule selbständig ausführen kann und somit die ersten Funktionsanteile einen großen Umfang besitzen.

Zur Bildung des Telekommunikationsnetzes COM können sowohl erfindungsgemäße Knotenpunkte mit erfindungsgemäßen netzseitigen Einrichtungen eingesetzt werden als auch bekannte Komponenten, z.B. Vermittlungsstellen und Übertragungsleitungen. Solche Vermittlungsstellen unterscheiden Verbindungswünsche zu den netzseitigen Einrichtungen des Netzwerkes NEX z.B. mit Hilfe von Verbindungstabellen oder durch spezielle Identifikatoren, z.B. Telefonnummern oder Netzwerkadressen, von Verbindungswünschen zu Kommunikationspartnereinrichtungen, die nicht über erfindungsgemäße netzseitige Einrichtungen erreichbar sind.

In dem Netzwerk SERV können von Intelligenten Netzen bekannte Einrichtungen verwendet werden, z.B. Service Creation Points, die dann über das Bereitstellen von Dienstfunktionen hinaus auch Anwendungsprogrammfunktionen anbieten. Das Netzwerk SERV kann jedoch auch aus kleineren Netzwerkeinheiten gebildet werden, z.B. aus lokalen, jeweils für eine Gruppe von netzseitigen Einrichtungen erreichbaren Netzwerken, die ähnlich wie LANs (=Local Area Networks) aufgebaut sind.

Als Knotenpunkte des Netzwerkes NEX können erfindungsgemäß betriebene, ansonsten jedoch übliche Datenverarbeitungsanlagen eingesetzt werden, welche die Funktionsanteile der netzseitigen Einrichtungen z.B. mit Hilfe der bereits erwähnten Dienstleistungsprofile leisten können. Die Funktionsanteile der netzseitigen Einrichtungen können auch von eigens für diesen Zweck gebauten Modulen erbracht werden, z.B. von Modulen, die einen Mikroprozessor, Speichereinrichtungen und Eingabe- und Ausgabeeinrichtungen enthalten und an Knotenpunkte des Telekommunikationsnetzes COM angeschlossen sind.

## Patentansprüche

1. Verfahren zur Erbringung von Telekommunikations-Funktionen,
bei dem mindestens eine erste netzseitige Einrichtung (NE1) in einem Telekommunikationsnetz (TCN) und mindestens ein erstes Endgerät (TER) für das Telekommunikationsnetz (TCN) miteinander verbunden werden können,
bei dem die erste netzseitige Einrichtung (NE1) prüft, ob sie mit dem ersten Endgerät (TER) verbunden ist
und bei dem die Funktionen durch Zusammenwirken von ersten Funktionsanteilen (F1), die das erste Endgerät (TER) leistet, und zweiten Funktionsanteilen (F21), die die erste netzseitige Einrichtung (NE1) leistet, gebildet werden, solange das erste Endgerät (TER) mit der ersten netzseitigen Einrichtung verbunden ist,
**dadurch gekennzeichnet,**
**dass** die erste netzseitige Einrichtung (NE1) die ersten Funktionsanteile (F1), die das erste Endgerät (TER) leistet, ermittelt,
**dass** dann, wenn das erste Endgerät (TER) nicht mit der ersten netzseitigen Einrichtung verbunden ist und deshalb die ersten Funktionsanteile (F1) nicht mit den zweiten Funktiortsanteilen (F21) zusammenwirken können, die erste netzseitige Einrichtung (NE1) die ersten Funktionsanteile (F1) durch dritte Funktionsanteile (F31) ersetzt oder nachbildet, und dass abhängig von mindestens einem bestimmbaren Parameter anstatt der ersten netzseitigen Einrichtung (NE1) eine zweite netzseitige Einrichtung (NE2), die zumindest zeitweise mit dem ersten Endgerät (TER) verbunden ist oder war, solche Funktionsanteile (F22, F32) leistet, die zumindest mit den zweiten Funktionsanteilen (F21) der ersten netzseitigen Einrichtung (NE1) vergleichbar sind.

2. Verfahren nach Anspruch 1, **dadurch gekennzeichnet, daß** in dem Telekommunikationsnetz (TCN) eine Telekommunikationsverbindung zu einer Kommunikationspartnereinrichtung von dem ersten Endgerät (TER), das mit der ersten netzseitigen Einrichtung (NE1) verbunden ist, über die erste netzseitige Einrichtung (NE1) aufgebaut wird.

3. Verfahren nach Anspruch 1, **dadurch gekennzeichnet, daß** das erste Endgerät (TER) zugleich mit der ersten und der zweiten netzseitigen Einrichtung (NE1, NE2) verbunden wird.

4. Verfahren nach Anspruch 1, **dadurch gekennzeichnet, daß** ein zweites Endgerät mit der ersten netzseitigen Einrichtung (NE1) verbunden wird und daß das zweite Endgerät vierte Funktionsanteile leistet, die mit den zweiten Funktionsanteilen (F21) zusammenwirken.

5. Verfahren nach Anspruch 1, **dadurch gekennzeichnet, daß** neben den Telekommunikations-Funktionen durch die erste netzseitige Einrichtung (NE1) und das Endgerät auch Anwendungsprogrammfunktionen erbracht werden.

6. Netzseitige Einrichtung (NE1) in einem Telekommunikationsnetz (TCN), zur Erbringung von Telekormmunikations-Funktionen gemäß dem Verfahren nach Anspruch 1
die Mittel zum Verbinden mit mindestens einem ersten Endgerät (TER) für das Telekommunikationsnetz (TCN) aufweist,
die Mittel aufweist, mit denen sie prüfen kann, ob sie mit dem ersten Endgerät (TER) verbunden ist
und die Mittel zum Leisten zweiter Funktionsanteile (F21) aufweist, die im Zusammenwirken mit ersten Funktionsanteilen (F1), die das erste Endgerät (TER) leistet, die Telekommunikations-Funktionen bilden, solange das erste Endgerät (TER) mit der netzseitigen Einrichtung (NE1) verbunden ist,
**dadurch gekennzeichnet,**
**dass** die netzseitige Einrichtung (NE1) Mittel zum Ermitteln der ersten Funktionsanteile (F1), die das erste Endgerät (TER) leistet, aufweist,
**dass** die netzseitige Einrichtung (NEX1) Mittel zum Ersetzen oder Nachbilden der ersten Funktionsanteile (F1) durch die dritten Funktionsanteile (F31) aufweist, wenn das erste Endgerät (TER) nicht mit der netzseitigen Einrichtung (NE1) verbunden ist und deshalb die ersten Funktionsanteile (F1) nicht mit den zweiten Funktionsanteilen (F21) zusammenwirken können,
und **dass** die netzseitige Einrichtung (NE1) Mittel zum Auswerten einer Anweisung aufweist, die die netzseitige Einrichtung (NE1) zum Leisten der zweiten oder dritten Funktionsanteile (F21, F31) anweist.

7. Knotenpunkt für ein Telekommunikationsnetz (TCN), **dadurch gekennzeichnet, daß** er mindestens eine netzseitige Einrichtung (NE1) nach Anspruch 6 aufweist.

8. Datenverarbeitungsanlage für ein Telekommunikationsnetz (TCN), **dadurch gekennzeichnet, daß** sie mindestens eine netzseitige Einrichtung (NE1) nach Anspruch 6 aufweist.

9. Endgerät (TER) für ein zumindest eine netzseitige Einrichtung (NE1) nach Anspruch 6 enthaltendes Telekommunikationsnetz (TCN), zur Erbringung von Telekommunikations-Funktionen gemäß dem verfahren nach Anspruchs 1
wobei das Endgerät (TER) eine Vorrichtung für eine Verbindung mit der netzseitigen Einrichtung (NE1) und Mittel zum Leisten erster Funktionsanteile (F1) aufweist, die mit den zweiten Funktionsanteilen (F21) der netzseitigen Einrichtung (NE1) zusammenwirken können, **dadurch gekennzeichnet, daß**
das Endgerät Mittel aufweist, mit denen es dann, wenn das Endgerät (TER) mit der netzseitigen Einrichtung (NE1) verbunden wird, zumindest ein Leistungsmerkmal der ersten Funktionsanteile (F1) der netzseitigen Einrichtung (NE1) übermitteln kann.

10. Telekommunikationssystem,
das ein Telekommunikationsnetz (COM) enthält, das Knotenpunkte und Übertragungswege enthält und mit dem mindestens ein Endgerät (TER) verbindbar ist und
das ein erstes Netzwerk (SERV) enthält, das mindestens eine Einrichtung (S1) zur Erbringung von Dienstfunktionen enthält,
**dadurch gekennzeichnet,**
**daß** das Telekommunikationssystem ein zweites Netzwerk (NEX) mit netzseitigen Einrichtungen (N1) zur Erbringung von Telekommunikationsfunktionen nach Anspruch 6 enthält, das mit dem Telekommunikationsnetz (COM) verbunden ist und das mit dem ersten Netzwerk (SERV) verbunden ist.

## Claims

1. A method of performing telecommunication functions, in which at least a first line-side device (NE1) in a telecommunications network (TCN), and at least a first terminal (TER) for the telecommunications network (TCN) can be connected to each other,
in which the first line-side device (NE1) checks whether it is connected to the first terminal (TER), and in which the functions are formed by the interaction of first function parts (F1) which are performed by the first terminal (TER), and second function parts (F21) which are performed by the first line-side device (NE1), as long as the first terminal (TER) is connected to the first line-side device,
**characterized in**
**that** the first line-side device (NE1) determines the first function parts (F1) which the first terminal (TER) performs,
**that** if the first terminal (TER) is not connected to the first line-side device and the first function parts (F1) are therefore unable to interact with the second function parts (F21), the first line-side device (NE1) replaces or simulates the first function parts (F1) with third function parts (F31),
and **that**, depending on at least one determinable parameter, instead of the first line-side device (NE1) a second line-side device (NE2), which is or was at least temporarily connected to the first terminal (TER), performs such function parts (F22, F32) which are at least comparable to the second function parts (F21) of the first line-side device (NE1).

2. A method according to claim 1, **characterized in that** in the telecommunications network (TCN) a telecommunications connection to a communications partner device is established via the first line-side device (NE1) by the first terminal (TER), which is connected to the first line-side device (NE1).

3. A method according to claim 1, **characterized in that** the first terminal (TER) is connected simultaneously to the first and the second line-side device (NE1, NE2).

4. A method according to claim 1, **characterized in that** a second terminal is connected to the first line-side device (NE1), and that the second terminal performs fourth function parts which interact with the second function parts (F21).

5. A method according to claim 1, **characterized in that** in addition to the telecommunications functions performed by the first line-side device (NE1) and the terminal, application program functions are also performed.

6. A line-side device (NE1) in a telecommunications network (TCN) for performing telecommunication functions according to the method of claim 1, which contains means for connecting the telecommunications network (TCN) to at least one first terminal (TER), which contains means whereby it is able to check whether it is connected to the first terminal (TER), and which has means for performing second function parts (F21) which form the telecommunication functions by interacting with first function parts (F1) performed by the first terminal (TER), as long as the first terminal (TER) is connected to the line-side device (NE1),
**characterized in**
**that** the line-side device (NE1) has means for determining the first function parts (F1) which the first terminal (TER) performs,
**that** the line-side device (NE1) has means for replacing or simulating the first function parts (F1) through the third function parts (F31), if the first terminal (TER) is not connected to the line-side device (NE1) and the first function parts (F1) are therefore unable to interact with the second function parts (F21),
and **that** the line-side device (NE1) has means for evaluating a command which instructs the line-side device (NE1) to perform the second or third function parts (F21, F31) .

7. A nodal point for a telecommunications network (TCN), **characterized in that** it contains at least one line-side device (NE1) as claimed in claim 6.

8. Data processing installation for a telecommunications network (TCN), **characterized in that** it contains at least one line-side device (NE1) as claimed in claim 6.

9. A terminal (TER) for a telecommunications network (TCN) containing at least one line-side device (NE1) as claimed in claim 6, for providing telecommunication functions according to the method of claim 1,
wherein the terminal (TER) has a device for a connection to the line-side device (NE1) and means for performing first function parts (F1), which are able to interact with the second function parts (F21) of the line-side device (NE1), **characterized in that**
the terminal has means whereby, when the terminal (TER) is connected to the line-side device (NE1), it is able to transmit at least one service feature of the first function parts (F1) of the line-side device (NE1).

10. A telecommunication system comprising a telecommunications network (COM) which contains nodal points and transmission paths, and to which at least one terminal (TER) can be connected,
and which contains a first network (SERV) that has at least one device (S1) for performing service functions, **characterized in that**
the telecommunications system contains a second network (NEX) with line-side devices (N1) for performing telecommunications functions as claimed in claim 6, which is connected to the telecommunications network (COM) and to the first network (SERV) as well.

## Revendications

1. Procédé pour fournir des fonctions de télécommunication
avec lequel peuvent être reliés entre eux au moins un premier élément de réseau (NE1) dans un réseau de télécommunication (TCN) et au moins un premier terminal (TER) pour le réseau de télécommunication (TCN),
avec lequel le premier élément de réseau (NE1) vérifie s'il est relié avec le premier terminal (TER)
et avec lequel les fonctions sont formées par l'interaction entre des premières parties de fonction (F1) accomplies par le premier terminal (TER) et des deuxièmes parties de fonction (F21) accomplies par le premier élément de réseau (NE1) tant que le premier terminal (TER) est relié avec le premier élément de réseau,
**caractérisé en ce**
**que** le premier élément de réseau (NE1) détermine les premières parties de fonction (F1) qui sont accomplies par le premier terminal (TER),
**que** lorsque le premier terminal (TER) n'est pas en liaison avec le premier élément de réseau et par conséquent que les premières parties de fonction (F1) ne peuvent pas interagir avec les deuxièmes parties de fonction (F21), le premier élément de réseau (NE1) remplace ou simule les premières parties de fonction (F1) par des troisièmes parties de fonction (F31)
et **qu'**en fonction d'au moins un paramètre pouvant être défini, un deuxième élément de réseau (NE2), qui est ou était relié au moins partiellement avec le premier terminal (TER), accomplit à la place du premier élément de réseau (NE1) des parties de fonction (F22, F32) qui sont comparables au moins avec les deuxièmes parties de fonction (F21) du premier élément de réseau (NE1).

2. Procédé selon la revendication 1, **caractérisé en ce qu'**une une liaison de télécommunication vers un équipement de correspondant est établie par le biais du premier élément de réseau (NE1) dans le réseau de télécommunication (TCN) depuis le premier terminal (TER) qui est relié avec le premier élément de réseau (NE1).

3. Procédé selon la revendication 1, **caractérisé en ce que** le premier terminal (TER) est en même temps relié avec le premier et le deuxième élément de réseau (NE1, NE2).

4. Procédé selon la revendication 1, **caractérisé en ce qu'**un deuxième terminal est relié avec le premier élément de réseau (NE1) et que le deuxième terminal accomplit des quatrièmes parties de fonction qui interagissent avec les deuxièmes parties de fonction (F21).

5. Procédé selon la revendication 1, **caractérisé en ce qu'**en plus des fonctions de télécommunication, le premier élément de réseau (NE1) et le terminal fournissent également des fonctions de programme d'application.

6. Élément de réseau (NE1) dans un réseau de télécommunication (TCN) pour accomplir des fonctions de télécommunication conformément au procédé selon la revendication 1,
qui présente des moyens pour être relié avec au moins un premier terminal (TER) pour le réseau de télécommunication (TCN),
qui présente des moyens avec lesquels il peut vérifier s'il est relié avec le premier terminal (TER)
et qui présente des moyens pour accomplir des deuxièmes parties de fonction (F21) qui, en interaction avec les premières parties de fonction (F1) accomplies par le premier terminal (TER), forment les fonctions de télécommunication tant que le premier terminal (TER) est relié avec l'élément de réseau (NE1),
**caractérisé en ce**
**que** l'élément de réseau (NE1) présente des moyens pour déterminer les premières parties de fonction (F1) qui sont accomplies par le premier terminal (TER),
**que** l'élément de réseau (NE1) présente des moyens pour remplacer ou simuler les premières parties de fonction (F1) par les troisièmes parties de fonction (F31) lorsque le premier terminal (TER) n'est pas en liaison avec l'élément de réseau (NE1) et par conséquent que les premières parties de fonction (F1) ne peuvent pas interagir avec les deuxièmes parties de fonction (F21),
et **que** l'élément de réseau (NE1) présente des moyens pour interpréter une instruction délivrée par l'élément de réseau (NE1) pour accomplir les deuxièmes ou troisièmes parties de fonction (F21, F31).

7. Point nodal pour un réseau de télécommunication (TCN), **caractérisé en ce qu'**il présente au moins un élément de réseau (NE1) selon la revendication 6.

8. Équipement de traitement de données pour un réseau de télécommunication (TCN), **caractérisé en ce qu'**il présente au moins un élément de réseau (NE1) selon la revendication 6.

9. Terminal (TER) pour un réseau de télécommunication (TCN) contenant au moins un élément de réseau (NE1) selon la revendication 6 pour accomplir des fonctions de télécommunication conformément au procédé selon la revendication 1,
le terminal (TER) présentant un dispositif pour établir une liaison avec l'élément de réseau (NE1) et des moyens pour accomplir des premières parties de fonction (F1) qui peuvent interagir avec des deuxièmes parties de fonction (F21) de l'élément de réseau (NE1),
**caractérisé en ce**
**que** le terminal présente des moyens avec lesquels, lorsque le terminal (TER) est relié avec l'élément de réseau (NE1), peut communiquer au moins une caractéristique des premières parties de fonction (F1) à l'élément de réseau (NE1).

10. Système de télécommunication
qui contient un réseau de télécommunication (COM) comprenant des points nodaux et des trajets de transmission et qui peut être relié avec l'au moins un terminal (TER)
qui contient un premier réseau (SERV) qui comprend au moins un dispositif (S1) destiné à fournir des fonctions de service
**caractérisé en ce**
**que** le système de télécommunication contient un deuxième réseau (NEX) muni d'éléments de réseau (NE1) pour accomplir des fonctions de télécommunication selon la revendication 6 qui est relié avec le réseau de télécommunication (COM) et qui est relié avec le premier réseau (SERV).
